# EUROPEAN PATENT APPLICATION

(11) **EP 3 647 205 A1**
(43) Date of publication of application: **06.05.2020**
(21) Application number: 19205847.7
(22) Date of filing: 29.10.2019
(51) Int. Cl.: B64D 33/08, F01P 3/00, B64D 37/34, F01M 5/00, B64D 41/00

(54) **METHOD AND SYSTEM FOR COOLING AN AUXILIARY POWER UNIT USING AIRCRAFT FUEL**

(30) Priority: 29.10.2018 US 201816173054
(71) Applicant: Pratt & Whitney Canada Corp., Longueuil, Québec J4G 1A1 (CA)
(72) Inventor: JULIEN, Andre, Longueuil, Québec J4G 1A1 (CA); DUSSAULT, Serge, Longueuil, Québec J4G 1A1 (CA)
(74) Representative: Dehns

(57) **Abstract**

A method of cooling an auxiliary power unit (APU) of an aircraft having prime mover engines fed with aircraft fuel, comprises: using the aircraft fuel as a heat sink to absorb the heat generated by the APU.

## Description

### TECHNICAL FIELD

The application relates generally to auxiliary power units (APUs) and, more particularly, to a method and system for cooling an APU using aircraft fuel.

### BACKGROUND OF THE ART

Auxiliary power units of the type including liquid cooled engines, such as intermittent internal combustion engines (e.g. Wankel engines), typically comprises an air cooler to cool the liquid coolant of the engines, as well as a blower to drive a cooling airflow through the cooler. In some aircraft applications, space may be limited for the installation of the air cooler and the blower. Also, the use of blowers increases weight and complexity.

Alternative APU cooling arrangements are thus desirable.

### SUMMARY

In one aspect, there is provided a method of cooling an auxiliary power unit (APU) of an aircraft, the method comprising: circulating a liquid coolant through a liquid-cooled engine of the APU, and circulating aircraft fuel in heat exchange relationship with the liquid coolant.

In another aspect, there is provided a method of cooling an auxiliary power unit (APU) of an aircraft having prime mover engines fed with aircraft fuel, the method comprising: using the aircraft fuel of the prime mover engines as a heat sink to absorb heat from a main source of heat of the APU.

In an embodiment of any of the above, the main source of heat of the APU comprises a liquid-cooled engine, and circulating the aircraft fuel through a liquid-to-liquid heat exchanger comprises circulating the aircraft fuel in heat exchange relationship with a liquid coolant circulated through a housing of the liquid-cooled engine.

In a further aspect, there is provided an aircraft power plant comprising: an aircraft fuel circuit; aircraft prime mover engines fluidly connected to the aircraft fuel circuit; and an auxiliary power unit (APU) comprising: an internal combustion engine having a housing in heat exchange relationship with a liquid coolant circuit, and a liquid-to-liquid heat exchanger in fluid communication with the liquid coolant circuit of the internal combustion engine and the aircraft fuel circuit.

### DESCRIPTION OF THE DRAWINGS

Reference is now made to the accompanying figures in which:
Fig. 1 is a schematic view of an auxiliary power unit (APU) installation comprising a liquid-to-liquid heat exchanger to cool the APU using aircraft fuel; and
Fig. 2 is a schematic cross-sectional view of a rotary engine which can be used in the APU installation of Fig. 1.

### DETAILED DESCRIPTION

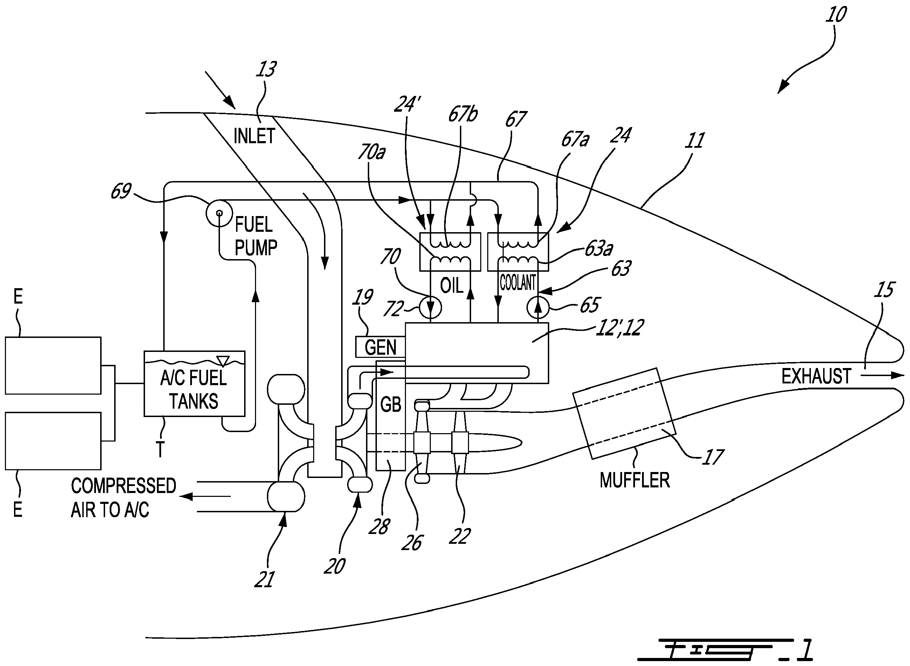

Fig. 1 illustrates a compound engine assembly 10 which in a particular embodiment is installed in a tail 11 of an aircraft engine for use as an auxiliary power unit (APU). The APU can be used to provide supplementary ground and flight pneumatic and/or electric power. The engine assembly 10 generally includes a supercharger compressor 20 receiving ambient air from an air inlet 13 for compressing the air prior to feeding an engine core 12' including one or more internal combustion engines 12, and a load compressor 21 providing compressed air for the aircraft. Alternately, the supercharger compressor 20 may also act as the load compressor, i.e. both functions may be performed by a same compressor.

The exhaust from the engine core 12' is fed to one or more turbines 26, 22 of a compounding turbine section having an outlet fluidly connected to an exhaust duct 15 for discharging the hot combustion gases to atmosphere. A muffler 17 may be provided in the exhaust duct 15 downstream of the turbine section. One or more of the turbines 26, 22 is/are configured to compound power with the engine core 12'; in the embodiment shown, the turbine and engine shafts are coupled through a transmission provided by a gearbox 28. The compressor(s) 20, 21 may be driven by the turbines 26, 22 and/or the engine core 12'. In the embodiment shown, the compressors 20, 21 are driven by the turbines 26, 22, for example by being coupled to the same shaft or being engaged to the turbine shaft through a transmission provided in the gearbox 28. In another particular embodiment, the shaft(s) of the compressor(s) 20, 21 is/are engaged to the output shaft of the engine core 12', either directly or through a transmission. As shown in Fig. 1, the engine core 12' may drivingly connected to a generator 19 to provide aircraft electrical power for accessories and/or control purposes.

In a particular embodiment, the internal combustion engine(s) 12 is/are rotary intermittent internal combustion engines, for example Wankel engines; it is however understood that other types of intermittent internal combustion engines or other types of internal combustion engines may alternately be used.

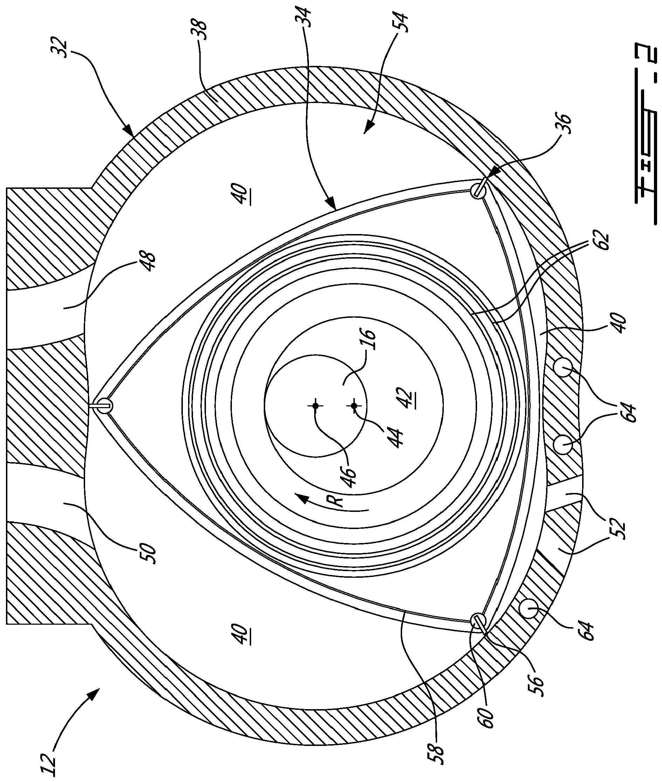

As shown in Fig. 2, the exemplary engine 12 comprises a housing 32 defining a rotor cavity having a profile defining two lobes, which is preferably an epitrochoid. A rotor 34 is received within the rotor cavity. The rotor defines three circumferentially-spaced apex portions 36, and a generally triangular profile with outwardly arched sides. The apex portions 36 are in sealing engagement with the inner surface of a peripheral wall 38 of the housing 32 to form and separate three working chambers 40 of variable volume between the rotor 34 and the housing 32. The peripheral wall 38 extends between two axially spaced apart end walls 54 to enclose the rotor cavity.

The rotor 34 is engaged to an eccentric portion 42 of an output shaft 16 to perform orbital revolutions within the rotor cavity. The output shaft 16 performs three rotations for each orbital revolution of the rotor 34. The geometrical axis 44 of the rotor 34 is offset from and parallel to the axis 46 of the housing 32. During each rotation of the rotor 34, each chamber 40 varies in volume and moves around the rotor cavity to undergo the four phases of intake, compression, expansion and exhaust.

An intake port 48 is provided through the peripheral wall 38 for admitting compressed air into one of the working chambers 40. An exhaust port 50 is also provided through the peripheral wall 38 for discharge of the exhaust gases from the working chambers 40. Passages 52 for a spark plug, glow plug or other ignition mechanism, as well as for one or more fuel injectors of a fuel injection system (not shown in Fig. 1) are also provided through the peripheral wall 38. Alternately, the intake port 48, the exhaust port 50 and/or the passages 52 may be provided through the end or side wall 54 of the housing. A sub-chamber (not shown) may be provided in communication with the chambers 40, for pilot or pre injection of fuel for combustion.

For efficient operation the working chambers 40 are sealed by spring-loaded peripheral or apex seals 56 extending from the rotor 34 to engage the inner surface of the peripheral wall 38, and spring-loaded face or gas seals 58 and end or corner seals 60 extending from the rotor 34 to engage the inner surface of the end walls 54. The rotor 34 also includes at least one spring-loaded oil seal ring 62 biased against the inner surface of the end wall 54 around the bearing for the rotor 34 on the shaft eccentric portion 42.

The fuel injector(s) of the engine 12, which in a particular embodiment are common rail fuel injectors, communicate with a source of Heavy fuel (e.g. diesel, kerosene (jet fuel), equivalent biofuel), and deliver the heavy fuel into the engine 12 such that the combustion chamber is stratified with a rich fuel-air mixture near the ignition source and a leaner mixture elsewhere.

The exemplary engine 12 is liquid cooled. Referring concurrently to Figs. 1 and 2, it can be appreciated that the engine 12 has a liquid coolant circuit 63 in heat exchange relationship with the engine housing 32 in order to pick up heat therefrom. In a particular embodiment, the coolant circuit 63 includes coolant passages 64 extending through the walls of the engine housing 32. A pumping unit 65, which may include one pump or more, is strategically positioned in the coolant circuit 63 outside of the engine 12 to move the liquid coolant in a continuous closed-loop cycle through the coolant circuit 63. In a particular embodiment, the engine coolant may be for example water, or water mixed with anti-freeze liquid(s), such as ethylene glycol. As shown in Fig. 1, the coolant circuit 63 is fluidly connected to one or more coolant conduits 63a of a liquid-to-liquid heat exchanger 24 where the hot liquid coolant is cooled down prior to being recirculated through the engine 12.

The liquid-to-liquid heat exchanger 24 further has one or more fuel conduits 67a connected to a fuel circuit 67 of the aircraft, the one or more fuel conduits 67a in heat exchange relationship with the one or more coolant conduit 63a to cool down the hot liquid coolant using aircraft fuel. For instance, in a single aisle or twin aisle aircraft, the quantity of aircraft fuel stocked in the aircraft fuel tanks T for feeding the aircraft prime mover engines E and other fuel-powered devices is significant (e.g. more than 30,000 lbs (13,608 kg) at take-off). Even after landing, when the APU is typically turned on, the quantity of fuel on the aircraft is still significant and often cooler after the flight. It is herein proposed to use this large quantity of "cold aircraft fuel" as a heat sink to dissipate the heat (about 1 million BTU/hr (1.055x10⁹ Joules/hr) generated by the internal combustion engine(s) 12 (the APU main source of heat), which is about 50-60% of the power produce by the APU. The APU is mostly used before take-off where fuel volume is very large so the temperature gain of the aircraft fuel resulting from the absorption of waste heat generated by the APU while the aircraft is on the ground is not problematic from a safety point of view. Also, the aircraft fuel, which is typically stored in the aircraft wings, will be cooled in flight by conduction through the aircraft wings and, thus, be colder again when the APU is used on the ground after flight when less fuel is available. On very hot days and long utilization of the APU after the flight, there could be a maximum fuel temperature limit preventing the use of the ground APU, but that would represent a very small percentage of the various missions. Sensors and a control unit operatively connected to fuel pumps could be used to shut down fuel flow through the heat exchanger 24 whenever need be.

As shown in Fig. 1, at least one fuel pump 69 is disposed in the aircraft fuel circuit 67 for drawing fuel from the tanks T to the heat exchanger 24. Ideally, some fuel tanks T may already be near the APU location to minimize the length of the fuel lines in the fuel circuit 67. The aircraft already has many fuel pumps to transfer the fuel from one tank to another, therefore according to a particular embodiment, existing fuel pumps could be used to mix the fuel and drive the fuel flow through the heat exchanger 24, thereby obviating the need for a separate or dedicated fuel pump for the heat exchanger fuel circuit.

In a particular embodiment, the internal combustion engine 12 further includes a lubricant circuit 70 communicating with engine element(s) requiring lubrication (e.g. bearings, seals, etc.), so as to circulate a suitable lubricant (e.g. oil) thereto. A second heat exchanger 24' has one or more lubricant conduit(s) 70a fluidly connected to the lubricant circuit 70. A lubricant pump 72 is positioned in the lubricant circuit 70 to move the lubricant in a continuous closed-loop cycle through the lubricant circuit 70 between the engine 12 and the second heat exchanger 24'. The second heat exchanger 24' further has one or more fuel conduit(s) 67b in heat exchange relationship with the lubricant conduit(s) 70a.. The one or more fuel conduit(s) 67b is fluidly connected to the aircraft fuel circuit 67.

Accordingly, the aircraft fuel can be used to cool down both the liquid coolant and the lubricant of the internal combustion engine(s) 12 of the APU. It is noted that the fuel flow through the fuel conduits 67a, 67b of the heat exchangers 24' 24' can be in series or in parallel. Also, the heat exchangers 24, 24' can be separate or integrated in a same heat exchanger body/housing.

Embodiments disclosed herein include:
A: A method of cooling an auxiliary power unit (APU) of an aircraft, the method comprising: circulating a liquid coolant through a liquid-cooled engine of the APU, and circulating aircraft fuel in heat exchange relationship with the liquid coolant.
B: A method of cooling an auxiliary power unit (APU) of an aircraft having prime mover engines fed with aircraft fuel, the method comprising: using the aircraft fuel of the prime mover engines as a heat sink to absorb heat from a main source of heat of the APU.

Each of the embodiments, A and B , may have one or more of the following additional elements in any combination. Element 1: circulating the aircraft fuel and the liquid coolant through a liquid-to-liquid heat exchanger. Element 2: further comprising circulating a lubricant of the liquid-cooled engine in heat exchange relationship with the aircraft fuel. Element 3: pumping the aircraft fuel from fuel tanks fluidly connected to prime mover engines of the aircraft. Element 4: circulating the liquid coolant and the aircraft fuel while the aircraft is on the ground. Element 5: wherein the liquid-cooled engine comprises an internal combustion engine having a rotor mounted for eccentric revolution within an internal cavity of a housing, and wherein circulating the liquid coolant comprises circulating the liquid coolant through coolant passages extending through the housing.

According to at least some embodiments, the advantages in weight of using the aircraft fuel as a heat sink for the APU would be noticeable as there is no need for a blower anymore to drive a flow of cooling air through an air cooler, and the inlet and exhaust airflow in the aircraft tail cone can potentially be reduced by about half, reducing the size of doors, ducting, etc. Also, liquid-to-liquid heat exchangers can be more compact than the traditionally used air-to-liquid coolers. Furthermore, with fuel cooling instead of air cooling, there would be no concern of cooling drag should the APU be used in flight. The APU SFC could also be improved as there would no longer be a need for blower power to drive a flow of cooling air through a radiator-type cooler. Maintenance would also be simplified.

The above description is meant to be exemplary only, and one skilled in the art will recognize that changes may be made to the embodiments described without departing from the scope of the invention disclosed. For example, the liquid-cooled engine of the APU could comprise an electric motor/generator and a battery pack. The aircraft fuel could be used to absorb the heat generated by the electric motor and the batteries. Also, the aircraft fuel could also be used to dissipate the heat generated by the generator 19. Still other modifications which fall within the scope of the present invention will be apparent to those skilled in the art, in light of a review of this disclosure, and such modifications are intended to fall within the appended claims.

## Claims

1. A method of cooling an auxiliary power unit (APU) of an aircraft, the method comprising:
circulating a liquid coolant through a liquid-cooled engine (12) of the APU; and
circulating aircraft fuel in heat exchange relationship with the liquid coolant to cool the liquid coolant.

2. The method of claim 1, wherein circulating aircraft fuel in heat exchange relationship with the liquid coolant comprises circulating the aircraft fuel and the liquid coolant through a liquid-to-liquid heat exchanger (24).

3. The method of claim 1 or 2, further comprising circulating a lubricant of the liquid-cooled engine in heat exchange relationship with the aircraft fuel.

4. The method of any preceding claim, wherein circulating a liquid coolant and circulating aircraft fuel is done while the aircraft is on the ground.

5. The method defined in any preceding claim, wherein the liquid-cooled engine (12) comprises an internal combustion engine (12) having a rotor (34) mounted for eccentric revolutions within an internal cavity of a housing (32).

6. The method of claim 5, wherein circulating the liquid coolant comprises circulating the liquid coolant through coolant passages (64) extending through the housing (32).

7. The method of any preceding claim, wherein circulating aircraft fuel comprises pumping the aircraft fuel from fuel tanks (T) fluidly connected to prime mover engines (E) of the aircraft.

8. The method of any of claims 1 to 6 wherein the aircraft has prime mover engines (E) fed with aircraft fuel, the method comprising: using the aircraft fuel as a heat sink to absorb heat from the liquid-cooled engine (12) of the APU.

9. The method of any preceding claim, further comprising circulating a lubricant of the APU in heat exchange relationship with the aircraft fuel.

10. An aircraft power plant comprising:
an aircraft fuel circuit (67);
one or more aircraft prime mover engines (E) fluidly connected to the aircraft fuel circuit (67); and
an auxiliary power unit (APU) comprising:
an internal combustion engine (12) having a housing (32) in heat exchange relationship with a liquid coolant circuit (63); and
a liquid-to-liquid heat exchanger (24) in fluid communication with the liquid
coolant circuit (63) of the internal combustion engine (12) and the aircraft fuel circuit (67).

11. The aircraft power plant defined in claim 10, wherein the APU further comprises a compressor section (20, 21) having an outlet in flow communication with an inlet of the internal combustion engine (12).

12. The aircraft power plant defined in claim 11, wherein the APU further comprises a turbine section (26, 22) having an inlet in fluid communication with an outlet of the internal combustion engine (12).

13. The aircraft power plant of claim 12, wherein the turbine section (26, 22) has at least one turbine (26, 22) compounded with the internal combustion engine (12).

14. The aircraft power plant of any one of claims 10 to 13, wherein the APU further comprises a lubricant circuit (70), and the lubricant circuit (70) is in heat exchange relationship with the aircraft fuel circuit (67).

15. The aircraft power plant of any one of claims 10 to 14, wherein the liquid coolant circuit (63) comprises coolant passages (64) extending through the housing (32) of the internal combustion engine (12).
